# EUROPEAN PATENT APPLICATION

(11) **EP 4 672 009 A1**
(43) Date of publication of application: **31.12.2025**
(21) Application number: 25186223.1
(22) Date of filing: 30.06.2025
(51) Int. Cl.: G06F 13/42

(54) **INFORMATION PROCESSING DEVICE, CONSUMABLES AND COMMUNICATION METHOD**

(30) Priority: 30.06.2024 CN 202410873951; 29.05.2025 CN 202510712554
(71) Applicant: Zhuhai Pantum Electronics Co., Ltd., Zhuhai, Guangdong 519000 (CN)
(72) Inventor: TIAN, Yi, Zhuhai, 519000 (CN); ZHANG, Hao, Zhuhai, 519000 (CN); LI, Haixiong, Zhuhai, 519000 (CN); WANG, Bo, Zhuhai, 519000 (CN)
(74) Representative: Dr. Gassner & Partner mbB

(57) **Abstract**

The present disclosure provides an information processing device, consumables and a communication method. In an embodiment of the present disclosure, the host device sends a setting instruction including a common communication address through a preset communication address of a communication bus, and obtain comprehensive response information based on an information acquisition request sent on the communication bus toward the common communication address. According to the comprehensive response information, the installation status of at least two slave devices connected to the communication bus may be determined, thereby shortening the detection time and improving the response speed of the host device.

## Description

### TECHNICAL FIELD

The present application relates to the field of communication technology, and in particular to a first slave device, an information processing device, consumables and a communication method.

### BACKGROUND

In order to enrich the functionality of a host device, the host device is often used in combination with various peripheral accessories. The interaction between each accessory and the host is usually carried out through a slave device, and each slave device is connected to the host device through a same communication bus. In actual applications, the accessory corresponding to a slave device may be unavailable due to improper installation of the slave device (e.g., poor contact or no contact, etc.), thereby affecting the operation of the host device. Therefore, before the host device takes action, it is usually necessary to perform an installation check of a slave device to ensure that the accessory corresponding to the slave device may be used normally. For example, when the host device is an image forming device such as a printer or a copier, and the accessory is a consumable for printing that is provided with a slave device such as a consumable chip, the image forming device needs to confirm the installation status of the slave device before performing the image forming operation, so as to obtain the necessary information from the slave device to carry out image forming controls.

In the existing technologies, a scheme for installation check of a slave device is as follows: after the host device is powered on, the installation status of each slave device is obtained by polling based on a preset communication address of each slave device, each slave device feeds back its own response information based on its own preset address, and the host device sequentially determines the installation status of each slave device based on the response information fed back by each slave device. However, since the host device needs to determine the installation status of each slave device in turn, it takes a long time and the response speed of the host device is slow. This phenomenon is more obvious when there are a large number of slave devices mounted on the communication bus. Specifically, one exemplary problem that arises is the extended time required for the image forming device to detect the installation status of each slave device after power-up, leading to a delay in the device reaching a ready state. As a result, users experience longer wait time before a print job is executed, which negatively impacts user experience. When the image forming device enters the ready state, the image forming device may immediately perform the image forming operation after receiving the data to be printed.

It should be noted that the information disclosed in this section of the present disclosure is merely intended to deepen the understanding of the general background technology of the disclosure, and should not be regarded as an admission or suggestion in any form that the information constitutes prior art already known to those skilled in the art.

### SUMMARY

The present disclosure provides a first slave device, an information processing device, consumables and a communication method, so as to solve the problems in the existing technologies that the host device needs to determine the installation status of each slave device in turn, resulting in a long time consumption and a slow response speed of the host device.

In one aspect, an embodiment of the present disclosure provides a communication method, including: acquiring a setting instruction sent by a host device at a preset communication address of a communication bus, where the setting instruction includes a common communication address; and responding to an information acquisition request sent by the host device at the common communication address of the communication bus, so as to form comprehensive response information on the communication bus for indicating an installation status of at least two slave devices connected to the communication bus.

In another aspect, an embodiment of the present disclosure provides an information processing device, including a memory and one or more processors, where the memory stores a computer program executable by the one or more processors, and when executing the computer program, the one or more processor are configured to implement a communication method disclosed elsewhere.

In another aspect, an embodiment of the present disclosure provides a consumable, including: a housing; a developer accommodating unit, located in the housing, for accommodating a developer; and an information processing device disclosed elsewhere.

In another aspect, an embodiment of the present disclosure provides a consumable, including: a photosensitive drum; a charging roller, configured for charging the photosensitive drum; and an information processing device disclosed elsewhere.

### BRIEF DESCRIPTION OF THE DRAWINGS

In order to more clearly illustrate the technical solutions of the embodiments of the present disclosure, the drawings essential for understanding the embodiments will be briefly introduced below. Apparently, the drawings described below are merely some embodiments of the present disclosure. For a person skilled in the art, other drawings may be obtained based on these drawings without making creative efforts.
FIG. 1 is a block diagram of a communication system, according to some embodiments of the present disclosure;
FIG. 2 is a schematic structural diagram of an image forming system, according to some embodiments of the present disclosure;
FIG. 3 is a schematic structural diagram of another image forming system, according to some embodiments of the present disclosure;
FIG. 4 is a flow chart of a communication method, according to some embodiments of the present disclosure;
FIG. 5 is a schematic diagram of communication between a host device and a slave device, according to some embodiments of the present disclosure;
FIG. 6 is a flow chart of another communication method, according to some embodiments of the present disclosure;
FIG. 7 is a flow chart of another communication method, according to some embodiments of the present disclosure;
FIG. 8 is a structural block diagram of an information processing device, according to some embodiments of the present disclosure;
FIG. 9 is a schematic structural diagram of a consumable, according to some embodiments of the present disclosure;
FIG. 10 is a schematic structural diagram of another consumable, according to some embodiments of the present disclosure;
FIG. 11 is a schematic structural diagram of another consumable, according to some embodiments of the present disclosure;
FIG. 12 is a schematic structural diagram of another consumable, according to some embodiments of the present disclosure; and
FIG. 13 is a schematic structural diagram of a host device, according to some embodiments of the present disclosure.

### DETAILED DESCRIPTION

In order to better understand the technical solutions of the present disclosure, the embodiments of the present disclosure are described in detail hereinafter with reference to the accompanying drawings.

It is to be noted that the described embodiments are merely part of the embodiments of the present disclosure, rather than all the embodiments. Based on the embodiments in the present disclosure, all other embodiments obtained by a person skilled in the art without making creative efforts should fall within the scope of protection of the present disclosure.

The terms used in the embodiments of the present disclosure are merely for the purpose of describing specific embodiments, and are not intended to limit the present disclosure. The singular forms "a", "said" and "the" used in the embodiments of the present disclosure and the appended claims are also intended to include plural forms, unless the context clearly indicates other meanings.

It should be understood that the term "and/or" used in the disclosure is merely a description of the association relationship of associated objects, indicating that there may be three relationships. For example, A and/or B may represent: A exists alone, A and B exist at the same time, and B exists alone. In addition, the character "/" in the disclosure generally indicates that the associated objects before and after are in an "or" relationship.

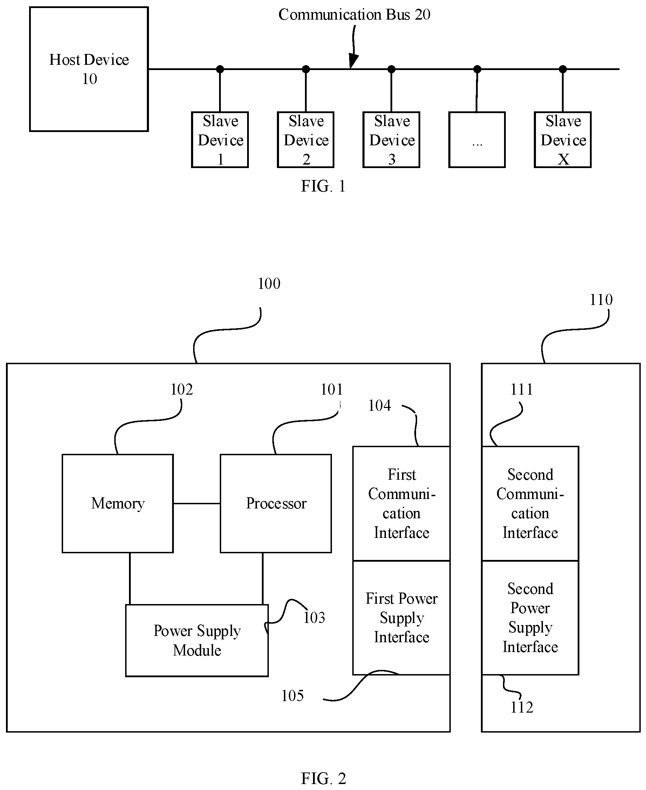

FIG. 1 is a block diagram of a communication system, according to some embodiments of the present disclosure. As shown in FIG. 1, the communication system includes a host device 10 and at least two slave devices 1-X, and the slave devices 1-X are communicatively connected to the host device 10 via a communication bus 20, so that data transmission between the host device 10 and the slave devices 1-X may be realized. It should be noted that, in an embodiment of the present disclosure, the number of slave devices is at least 2, that is, X is greater than or equal to 2, where X is an integer. In some embodiments, the host device 10 and the slave devices 1-X are connected by wire, and communication is performed based on the inter-integrated circuit (I2C) communication protocol.

Furthermore, in some embodiments, the host device and at least two slave devices transmit specific data through a same data line. It should be noted that the above content merely defines the case of a data bus used to transmit specific data between the host device and the slave devices. A person skilled in the art may set the connection mode of the data bus for transmitting other types of data between the host device and the slave devices and other types of buses according to actual needs, which is not limited in the present disclosure.

In some embodiments, the host device is an image forming device. Exemplarily, the image forming device may be an inkjet printer, a laser printer, a 3D printer, a label printer, a dot matrix printer, etc. Further, the image forming device includes an image forming control unit and an image forming unit, where the image forming control unit is configured to control the image forming device as a whole, and the image forming unit is configured to form an image on a conveyed paper under the control of the image forming control unit based on the image data. The image forming control unit may be a system-on-chip (SoC), which is a micro system composed of components of multiple systems and is configured to control the imaging processing operation of the image forming device, such as linear correction, noise reduction, bad pixel removal, detail enhancement, and the like for the image data, thereby improving the quality of the image output. The image forming control unit is also configured to perform processing operations related to data transmission and reception, command transmission and reception, and engine control of printing images, such as transmitting and receiving data, printing engine control commands, status, etc., through an interface unit (including but not limited to a USB port, a wired network port, a wireless network port, or other interfaces). Accordingly, a slave device may be a consumable that is detachably mounted on the image forming device. The consumable is usually an ink cartridge, a toner cartridge, a ribbon cartridge, etc. The consumable may also be other easily damaged components, parts, units (such as paper boxes) that may be installed in the image forming device and need to be replaced, which also belong to the technical solutions corresponding to the consumable protected by the present disclosure. In addition, the slave device may also refer to a circuit unit installed on the consumable, which is composed of one or more hardware circuits. In some embodiments, at least part of the one or more hardware circuits includes a processor.

In some embodiments, the host device may be a computer. Accordingly, the accessory may be a peripheral device of the computer. Alternatively, the host device may be a mobile terminal (such as a mobile phone, a tablet computer, a personal digital assistant, etc.). Accordingly, the accessory may be a peripheral device of the mobile terminal, such as a lithium battery, a wearable device, etc., which is not specifically limited in the embodiments of the present disclosure.

The host device and the slave device need to be determined in a specific application scenario. A host device in one scenario may be a slave device in another scenario. Similarly, a slave device in one scenario may be a host device in another scenario.

For a consumable of the image forming device, one possible implementation is that the consumable is of a split structure, including a drum box and a developer box that are detachable from each other, where the drum box includes a photosensitive drum and a charging roller, and the developer box includes a developer accommodating unit, a developer roller, and a developer conveying element. Another possible implementation is that the consumable is of an integrated structure, for example, the consumable includes a developer accommodating unit, a developer roller, a developer conveying element, a photosensitive drum, a charging roller, etc.

In some embodiments, the consumable may include just a housing and a developer accommodating unit. It is also to be noted that the consumable may also be the developer box or drum box. The developer accommodating unit is used to accommodate a developer such as a toner. The developer conveying element is a component such as a powder feeding roller, a powder feeding screw, etc., for stirring and/or conveying toner. Apparently, the developer box may also include just the developer accommodating unit, which is not limited in the disclosure. Furthermore, the developer box may also include merely the developer accommodating unit and the developer conveying element, which is not limited in the disclosure.

In some embodiments, the consumable may also include a powder cartridge and/or an imaging component, and the powder cartridge is configured to deliver toner to the imaging component when the toner contained in the imaging component is insufficient, so that the image forming device forms an image based on the toner delivered by the imaging component. When the consumable is a powder cartridge, the consumable may just include a housing and a developer accommodating unit, or may include a housing, a developer accommodating unit, and a developer conveying element, which is not limited in the present disclosure. When the consumable is an imaging component, the consumable may include a housing, a developer accommodating unit, a developer conveying unit, a charging roller, a photosensitive drum, etc., which is not limited in the disclosure.

In some embodiments, a consumable is also used in conjunction with a consumable chip. In some embodiments, the consumable chip may be installed on the consumable. The consumable chip may be installed on the consumable before the consumable leaves the factory, or may be installed on the consumable by a user after the consumable leaves the factory. In some embodiments, the consumable chip does not need to be installed on the consumable, but is fixed to the image forming device by a mounting mechanism or an adhesive. When the image forming device uses the consumable, the contact points of the consumable chip are electrically contacted with the contact terminals corresponding to the image forming device, thereby realizing the electrical connection between the consumable chip and the image forming device. When the image forming device does not use the consumable (i.e., the consumable is not in working state), for example, when the consumable is installed in the image forming device but is not being used, or when the consumable is taken out of the image forming device, the contact points of the consumable chip may or may not be in contact with the contact terminals corresponding to the image forming device. It should be noted that when the consumable is of the split structure including a drum box and a developer box that are detachable from each other, the drum box and the developer box may be equipped with a respective consumable chip.

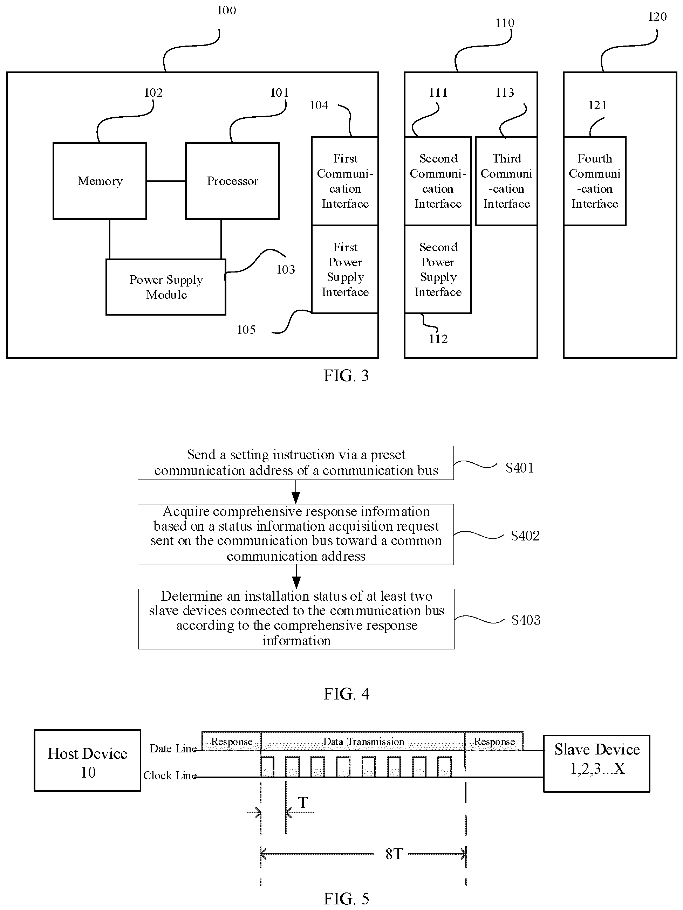

In some embodiments, the slave device is a consumable chip or a consumable chipset. When the consumable chip is electrically connected to the image forming device, the consumable chip may communicate with the image forming device, and may provide information related to the consumable to the image forming device through the consumable chip, so that the image forming device may obtain basic information about the consumable, such as the manufacturer, type, color, capacity and usage of the recording material (e.g., toner, ink), etc. In addition, during the image forming operation, the image forming device may also write the updated information of the consumable (e.g., the usage of the developer) into the consumable chip. In some embodiments, the consumable chip includes a substrate and a plurality of contact points, where the plurality of contact points are disposed on the substrate. Each contact point is respectively configured to be electrically connected to a plurality of contact terminals disposed on the image forming device, thereby realizing communication between the image forming device and the consumable chip. The plurality of contact points may include a power contact VCC, a ground contact GND, a data line contact SDA, and a clock line contact SCL. In some embodiments, the consumable chip in the embodiments of the present disclosure may also include an adapter plate in addition to the substrate, where the adapter plate is electrically connected to the substrate, and the multiple contact points may be at least partially disposed on the adapter plate. Specifically, referring to FIG. 2, the second communication interface 111 of the consumable chip 110 may be electrically connected to the first communication interface 104 of the image forming device 100, thereby being electrically connected to the processor 101 of the image forming device 100 through the first communication interface 104. In some embodiments, the first communication interface 104 and the second communication interface 111 may be I2C interfaces, respectively. The second power supply interface 112 of the consumable chip 110 may be electrically connected to the first power supply interface 105 of the image forming device 100, so that the image forming device 100 may power the consumable chip 110 through the first power supply interface 105 and the second power supply interface 112. In one embodiment, the image forming device 100 is further provided with a memory 102 and a power supply module 103. The memory 102 is connected to the processor 101. The memory 102 may store computer-executable instructions. When the image forming device 100 performs corresponding processing, the processor 101 may execute the computer-executable instructions stored in the memory 102. The power supply module 103 is connected to the memory 102 and the processor 101 respectively, and may supply power to the memory 102 and the processor 101 to ensure normal operation. In some embodiments, the slave device includes a first consumable chip and a second consumable chip. In some embodiments, referring to FIG. 3, the first consumable chip 110 and the second consumable chip 120 are communicatively connected. When the image forming device 100 communicates with the first consumable chip 110, the image forming device 100 acts as a host to send an instruction to the first consumable chip 110, and the first consumable chip 110 acts as a slave to respond to the instruction sent by the host. When the first consumable chip 110 and the second consumable chip 120 communicate, the first consumable chip 110 acts as a host to send the instruction to the second consumable chip 120, and the second consumable chip 120 acts as a slave to respond to the instruction sent by the first consumable chip 110. The instruction sent by the first consumable chip 110 to the second consumable chip 120 may be generated by the first consumable chip 110, or the first consumable chip 110 may forward the instruction sent by the image forming device 100. At this moment, the first consumable chip 110 determines who should process the instruction sent by the image forming device 100, and when it is determined that the instruction should be processed by the second consumable chip 120, the instruction is forwarded to the second consumable chip 120. The third communication interface 113 of the first consumable chip 110 may be electrically connected to the fourth communication interface 121 of the second consumable chip 120. In some embodiments, the third communication interface 113 and the fourth communication interface 121 may be wired communication interfaces, such as I2C interfaces, or optical, infrared or other appropriate information transmission path interfaces. In some embodiments, a switch controlled by the first consumable chip is provided in the communication link between the first consumable chip and the second consumable chip and the image forming device. When the first consumable chip determines that the first consumable chip needs to communicate with the image forming device at the current stage, the communication link between the first consumable chip and the image forming device is connected by the switch, or the communication link between the first consumable chip and the image forming device keeps being connected. When the first consumable chip determines that the second consumable chip needs to communicate with the image forming device at the current stage, the communication link between the second consumable chip and the image forming device is connected by the switch. When the first consumable chip determines that the second consumable chip does not need to communicate with the image forming device at the current stage, the communication link between the second consumable chip and the image forming device is disconnected by the switch.

In some embodiments, the slave device includes the consumable chip or consumable chipset and an auxiliary circuit module. The consumable chip is connected to the auxiliary circuit module, and may be connected through a wired communication interface, or may be connected through an optical, infrared or other appropriate information transmission path interfaces. The auxiliary circuit module is configured to implement some functions of the consumable chip, or additional functions. The auxiliary circuit module may respond to the instruction of the consumable chip, or be enabled by a signal other than the instruction of the consumable chip, to provide the consumable chip or the host device with corresponding data information or waveform information and other information. The auxiliary circuit module may include logic units such as AND gates, OR gates, NOT gates, triggers, etc., and may also include circuit units of devices, such as field programmable gate array (FPGA), microcontroller unit (MCU), digital signal processing (DSP), etc. Those skilled in the art may configure the auxiliary circuit module according to actual needs. The embodiments of the present disclosure do not limit the composition and specific functions of the auxiliary circuit module.

In some embodiments, the host device and the slave device are electrically connected by contact pins, contact points, or by spring. However, in actual applications, due to poor contact or no contact between the host device and the slave device, the slave device may be unavailable. Specifically, the host device and the slave device may include the following three connection states.

The first state: the host device and the slave device are in good contact. At this moment, a current loop is formed between the host device and the slave device, and the host device and the slave device may communicate stably. In other words, when the host device and the slave device are in good contact, the communication state between the host device and the slave device is stable, and data transmission between the host device and the slave device will not cause data transmission failures such as data distortion and data transmission interruption.

The second state: the host device is in contact with the slave device, but there is a problem of poor contact. In this case, although a current loop may be formed between the host device and the slave device, the current value of the current loop is less than a preset value, resulting in an unstable communication state between the host device and the slave device. In other words, data transmission between the host device and the slave device may cause data transmission failures such as data distortion and data transmission interruption.

The third state: the contact between the host device and the slave device is completely disconnected. In this case, the host device and the slave device cannot communicate at all.

Furthermore, in order to simplify the procedure, in some embodiments, the first state mentioned above may be classified as "installed in place", that is, the host device and the slave device are in a state of stable communication. The second and third states mentioned above may be classified as "not installed in place", that is, the host device and the slave device are in a state of unstable communication.

In actual applications, a slave device may not be properly installed, which may cause the corresponding accessory of the slave device to be unavailable, thereby affecting the operation of the host device. Therefore, before the host device works, it is usually necessary to test the slave device to ensure that the corresponding accessory of the slave device may be used properly.

In the existing technologies, a detection scheme for a slave device is as follows: after the host device is powered on, the host device obtains response information based on feedback from each slave device by polling, and determines the installation status of each slave device in turn. Exemplarily, the host device is connected to four slave devices through a communication bus, namely, slave device 1, slave device 2, slave device 3 and slave device 4. After the host device is powered on, the host device sends an inquiry instruction 1 to slave device 1, and slave device 1 responds to the inquiry instruction 1 by sending response information 1 to the host device through the communication bus, and the host device determines the installation status of slave device 1 based on response information 1. Specifically, if response information 1 meets expectations, it is determined that slave device 1 is installed in place. If response information 1 does not meet expectations, it is determined that slave device 1 is not installed in place. Similarly, after sending inquiry instruction 1 to slave device 1, the host device sends inquiry instruction 2 to slave device 2, and slave device 2 responds to the inquiry instruction 2 by sending response information 2 to the host device through the communication bus. The host device determines the installation status of slave device 2 based on response information 2. Installation status of slave device 3 and slave device 4 will be similarly determined, details of which will not be repeated here.

Although the installation status detection of the slave devices may be completed according to the above method, since the host device determines the installation status of each slave device in turn by polling, it takes a long time and the processing speed of the host device is slow. This phenomenon is more obvious when there are a large number of slave devices mounted on the communication bus.

In view of the above problems, the embodiments of the present disclosure provide a detection scheme for slave devices, which solves the technical problem that when there are a large number of slave devices mounted on the communication bus, the host device takes a long time to detect the installation status of the slave devices. The host device disclosed herein merely needs to obtain comprehensive response information to simultaneously confirm the installation status of a plurality of slave devices, thereby shortening the detection time and improving the response speed of the host device. This is described in detail below.

In order to facilitate understanding, the technical solutions provided by the embodiments of the present disclosure are described in detail from the host device side and the slave device side respectively. Here, for the convenience of description, a slave device in the communication system is referred to as the "first slave device", and the technical solution of the slave device side is described from the perspective of the first slave device. In order to distinguish from other slave devices in the communication system, other slave devices in the communication bus are referred to as "second slave devices". Exemplarily, if the slave device 1 in FIG. 1 is taken as the first slave device, the remaining slave devices (slave device 2-slave device X) are all second slave devices.

FIG. 4 is a flow chart of a communication method, according to some embodiments of the present disclosure. The method may be applied to the host device 10 shown in FIG. 1. As shown in FIG. 4, the method mainly includes the following steps.

Step S401: Send a setting instruction via a preset communication address of the communication bus.

When the host device needs to perform an installation status detection on at least two slave devices connected to the communication bus, the host device will send corresponding setting instructions to the at least two slave devices respectively. In some possible application scenarios, the number of slave devices mounted on the communication bus is equal to the number of slave devices that need to be detected for installation status, that is, the host device needs to detect the installation status of all slave devices on the communication bus. In some possible application scenarios, the number of slave devices mounted on the communication bus is greater than the number of slave devices that need to be detected for installation status, that is, the host device just needs to detect the installation status of some slave devices on the communication bus.

In order to make at least two slave devices correctly respond to the setting instructions corresponding to themselves, the host device outputs the corresponding setting instructions to the communication bus based on the preset communication address corresponding to each slave device. The preset communication address corresponding to each slave device on the communication bus may be configured before the host device and the slave devices leave the factory, or before the host device and the slave devices establish communication for the first time, or in other scenarios, which is not limited in the embodiments of the present disclosure. In some embodiments, a slave device stores its preset communication address in its non-volatile memory. After establishing communication, the host device and the slave device may directly use the configured preset communication address for information exchange. The preset communication addresses of different slave devices on the communication bus are different from each other.

In some application scenarios, some slave devices store preset communication addresses of other slave devices on the communication bus. For example, slave device 1, slave device 2, and slave device 3 are connected to the communication bus, slave device 1 corresponds to preset communication address 1, slave device 2 corresponds to preset communication address 2, and slave device 3 stores preset communication address 1 and preset communication address 2. When the host device sends setting instructions through preset communication addresses 1 and 2 of the communication bus, slave devices 1 to 3 may all obtain a common communication address.

A setting instruction includes a common communication address of at least two slave devices on the communication bus. In some embodiments, the common communication address is different from the preset communication addresses of at least two slave devices on the communication bus. The setting instruction is configured to instruct the corresponding slave device to respond to an information acquisition request sent by the host device at the common communication address on the communication bus. In some embodiments, the slave device caches the common communication address.

In some embodiments, the setting instruction further includes response indication information, and the response indication information is used to indicate the content of the response information output by the corresponding slave device when responding to the information acquisition request sent by the host device at the common communication address.

Specifically, since the response information output by each slave device forms comprehensive response information on the communication bus, the host device may determine the installation status of each slave device according to the content of the comprehensive response information. In some embodiments, the response information output by each slave device has the same data length as the comprehensive response information, and the data segments used to represent the installation status of the corresponding slave device in the response information of each slave device are different, so different data segments in the comprehensive response information may be used to represent the installation status of different slave devices respectively. The response indication information is used to indicate the data content output by the corresponding slave device in the corresponding data segment in the response information, and the data segments corresponding to each slave device are different. For the sake of convenience, the data content output by each slave device in its corresponding data segment is referred to as "verification information", and the verification information corresponding to each slave device may be the same or different. After obtaining the setting instruction, the slave device determines the response information to be output according to the response indication information therein.

Step S402: Acquire comprehensive response information based on the information acquisition request sent on the communication bus toward the common communication address.

The host device sends an information acquisition request on the communication bus based on the common communication address. A slave device, of the at least two slave devices, that stores (such as cache) the common communication address connected to the communication bus may respond to the information acquisition request and output its own response information on the communication bus when it is installed in place. If the slave device is not installed in place, it cannot respond to the information acquisition request. The results of the at least two slave devices connected to the communication bus responding or not responding to the information acquisition request are the comprehensive response information formed on the communication bus. It should be noted that the response information of a specific slave device may be output by the specific slave device itself, or it may be output by other slave devices. When other slave devices output the response information on behalf of the specific slave device, since the comprehensive response information contains the response information corresponding to the specific slave device, it also belongs to a situation like the specific slave device responds.

Step S403: Determine the installation status of at least two slave devices connected to the communication bus according to the comprehensive response information.

After the host device obtains the comprehensive response information, the installation status of each slave device may be determined according to the comprehensive response information. For example, if all slave devices are installed in place, the comprehensive response information includes the response information output by all slave devices. For another example, if all slave devices are not installed in place, the comprehensive response information does not contain the response information of any slave device. For another example, if some slave devices are installed in place, the comprehensive response information includes the response information output by these slave devices installed in place. In some embodiments, it may be determined whether a corresponding slave device is installed in place according to whether the data content of the corresponding data segment in the comprehensive response information is consistent with the verification information of each slave device. For example, when the contents of all data segments corresponding to the at least two slave devices in the comprehensive response information match the contents of the corresponding verification information, the host device determines that all slave devices in the at least two slave devices are installed in place. When the contents of all data segments corresponding to the at least two slave devices in the comprehensive response information do not match the contents of the corresponding verification information, the host device determines that all slave devices in the at least two slave devices are not installed in place. If the contents of the data segments corresponding to some slave devices in the at least two slave devices in the comprehensive response information match the contents of the corresponding verification information, and the contents of the data segments corresponding to the remaining slave devices in the at least two slave devices in the comprehensive response information do not match the contents of the corresponding verification information, the host device determines that some slave devices in the at least two slave devices are installed in place, and the remaining slave devices are not installed in place. As in the example described earlier, slave device 3 stores the preset communication addresses corresponding to slave devices 1 and 2, and slave device 3 may respond to the information acquisition request sent by the host device through the common communication address, and output the response information corresponding to slave device 1 and the response information corresponding to slave device 2 on the communication bus.

The implementation method of the embodiments of the present disclosure is described in detail below.

Those skilled in the art may set the implementation of the embodiments of the present disclosure according to the communication protocol between the host device and the slave device. In some embodiments, the communication between the host device and the slave device is performed based on the I2C protocol.

Based on the I2C protocol, the general format of a write data frame sent by the host device to a target slave device is [start signal | communication address corresponding to the target slave device + write flag bit | response 1 | write data | response 2 | end signal]. The "response 1" signal is a response signal output by the target slave device based on the communication address and write flag bit corresponding to the target slave device obtained in the write data frame. The "write data" is the data information sent by the host device to the target slave device. The "response 2" signal is a response signal output by the target slave device based on the write data obtained in the write data frame. Generally, the "write data" may be divided into multiple segments. The target slave device outputs a "response 2" signal every time it obtains a segment of the write data in the write data frame. In some embodiments, the "write data" is segmented by bytes, and the target slave device outputs a "response 2" signal each time it obtains one byte of data information of the write data in the write data frame.

The general format of a read data frame sent by the host device to a target slave device is [start signal | communication address corresponding to the target slave device + read flag bit | response 3 | read data | response 4 | end signal]. The "response 3" signal is a response signal output by the target slave device based on the communication address and read flag bit corresponding to the target slave device in the read data frame. The "read data" is the data information output by the target slave device to the host device. The "response 4" signal is a response signal output by the host device based on the read data in the read data frame. Generally, the "read data" may be divided into multiple segments, and the host device outputs a "response 4" signal each time it obtains a segment of the read data in the read data frame. In some embodiments, the "read data" is segmented by bytes, and the host device outputs a "response 4" signal each time it obtains one byte of data information of the read data in the read data frame.

In step S401, based on the I2C protocol, the host device sends multiple write data frames in the setting instruction through the preset communication addresses of the communication bus. Each write data frame corresponds to each of the at least two slave devices, and the write data frame corresponding to any one of the at least two slave devices includes the corresponding preset communication address of the slave device. The slave device obtains the common communication address in the "write data" in its corresponding write data frame based on matching its own preset communication address with the "communication address corresponding to the target slave device" in the write data frame. Furthermore, when each write data frame in the setting instruction also includes response indication information corresponding to the slave device, the slave device may also obtain the corresponding response indication information in the "write data", respectively.

In step S402, based on the I2C protocol, the host device obtains comprehensive response information based on the information acquisition request sent on the communication bus toward the common communication address. Since corresponding write data frames are sent to at least two slave devices respectively in step S401, at least some of the at least two slave devices may respectively determine the common communication address based on the corresponding write data frames. The slave devices that store (such as caching) the common communication address among the at least two slave devices connected to the communication bus in step S402 may, when installed in place, simultaneously respond to the information acquisition request based on the common communication address.

In the I2C protocol, the I2C communication bus includes a clock line and a data line. Each slave device outputs a signal in the form of binary on the communication bus. On the communication bus, a low level represents a binary number 0, and a high level represents a binary number 1. Each bit of binary data on the data line corresponds to a specific number of clock cycles of the clock line. A clock cycle includes a rising edge, a high level, a falling edge, and a low level. For example, referring to FIG. 5, assume that each clock cycle corresponds to one bit of output data, and the duration of a clock cycle is T. The "data transmission" is a segment of the "write data" or "read data" in the data frame. When the "write data" or "read data" is segmented by bytes (where a byte includes 8 bits), the clock cycle duration corresponding to the "data transmission" is 8T. The "response" may be the "response 1", "response 2", "response 3" or "response 4" signal, and the duration between the two "response" signals is 8T. The device outputs one byte, that is, 8 bits of data, in this 8T transmission cycle.

I2C communication bus has an open-drain output. When no device outputs data or the binary data values output by the device are all 1, a high impedance state is formed on the communication bus, and a high level is maintained. When there is a slave device that outputs a value of 0 on the communication bus, that is, outputs a low level, even if other slave devices simultaneously output a binary value of 1, the communication bus still shows a low level, that is, outputs a value of 0. It may be understood that when at least two devices simultaneously output binary signals on the communication bus, the binary signals respectively output by the at least two devices will automatically obtain the result of the AND operation on the communication bus. For example, slave device 1 and slave device 2 simultaneously output 10101111 and 11111111 respectively, and 10101111 and 11111111 are ANDed to obtain 10101111, and the signal output on the communication bus is 10101111.

In step S402, when two or more slave devices among the at least two slave devices output response information on the communication bus simultaneously, i.e., in the same time period, a result obtained after a logical AND operation of the response information will be automatically generated on the communication bus. Exemplarily, assuming that at least two slave devices are 4 slave devices, the comprehensive response information is set to binary data of 4 bytes in length, the response information corresponding to slave device 1 is 10101111 11111111 11111111 11111111, the response information corresponding to slave device 2 is 11111111 01010101 11111111 11111111, the response information corresponding to slave device 3 is 11111111 11111111 01111111 11111111, and the response information corresponding to slave device 4 is 11111111 11111111 11111111 11111100. It may be understood that when slave device 1, slave device 2, slave device 3 and slave device 4 respond to the information acquisition request and output their corresponding response information on the communication bus at the same time, the comprehensive response information 10101111 01010101 01111111 11111100 will be obtained. When just slave device 1 outputs response information on the communication bus, the comprehensive response information 10101111 11111111 11111111 11111111 is obtained. When slave device 1, slave device 2, slave device 3 and slave device 4 do not output response information on the communication bus, the comprehensive response information 11111111 11111111 11111111 11111111 is obtained.

In S402, when the host device needs to obtain the information output by a target slave device, the host device obtains it by sending a read data frame on the communication bus, and the read data frame includes a common communication address, which is used to instruct the corresponding slave device to output information of a specific length in a specific clock cycle. In an embodiment of the present disclosure, in order to allow the host device to determine the installation status of at least two slave devices by obtaining comprehensive response information, the at least two slave devices simultaneously output response information to generate comprehensive response information. The information acquisition request may be part or all of the data in the read data frame. Still taking the at least two slave devices as including 4 slave devices as an example, after step S401, the 4 slave devices have cached the common communication address, and the host device sends read data frames based on the common communication addresses to request the slave devices corresponding to the common communication addresses to respond, that is, by sending an information acquisition request to obtain comprehensive response information. Therefore, when the host device obtains the comprehensive response information from the communication bus in the corresponding clock cycle, if all four slave devices are installed in place and output corresponding response information, the response information output by the four slave devices will be obtained by the host device at the same time. It may be understood that the response information output by the four slave devices is combined into comprehensive response information through logical AND operation.

Apparently, those skilled in the art may also set the communication protocol between the host device and the slave device to other communication protocols according to actual needs, and set different data frame formats, comprehensive response information formation methods and data information acquisition methods based on different communication protocols.

It should be noted that, in the embodiments of the present disclosure, the response information output by each slave device and the data length of the "comprehensive response information" are the same. The data segment, in the response information output by each slave device and in the comprehensive response information, used to indicate the installation status of the corresponding slave device is called "verification information". The data segments, in the response information output by each slave device and in the comprehensive response information, that are not used to indicate the installation status of the slave device are called "redundant data segments". Exemplarily, the at least two slave devices include 4 slave devices, and the data length of the comprehensive response information is set to 8 bytes (1 byte is equal to 8 bits), and the length of the data segment indicating the installation status of each slave device in the response information is 1 byte. The verification information corresponding to the 4 slave devices is the first 4 bytes of the response information, such as the verification information corresponding to slave device 1 is the first byte of the response information, the verification information corresponding to slave device 2 is the second byte of the response information, the verification information corresponding to slave device 3 is the third byte of the response information, and the verification information corresponding to slave device 4 is the fourth byte of the response information. Then, the last four bytes of the response information are redundant data segments. In the step S403, the host device determines the installation status of a slave device based on the comprehensive response information and may ignore the redundant data segment. Therefore, in the response information output by the slave device on the communication bus, the last four bytes are also redundant data segments. Exemplarily, the verification information content corresponding to slave device 1 is 10101111, the verification information content corresponding to slave device 2 is 01010101, the verification information content corresponding to slave device 3 is 01111111, and the verification information content corresponding to slave device 4 is 11111100. When the response information output by the first slave device is just used to indicate that slave device 1 is installed in place, the first byte content of the first response information should be 10101111, and the following three bytes of the response information may be any content. In order to avoid interfering with the host device's determination result of the installation status of slave device 2, slave device 3, and slave device 4, the first slave device preferably outputs the content of the second, third, and fourth bytes of the response information as 11111111 11111111 11111111. Based on the I2C protocol, those skilled in the art may also configure a host device to read other information in addition to the comprehensive response information in a read data frame based on an information acquisition request sent on the communication bus toward a common communication address to obtain comprehensive response information. It is just necessary to ensure that a slave device outputs the response information in the clock cycle corresponding to the comprehensive response information. For example, it is assumed that the first 4 bytes of the "read data" in the read data frame format in the read data frame for obtaining the comprehensive response information are the comprehensive response information, and the slave devices installed in place will simultaneously output the response information in the time period corresponding to the 4 bytes.

In some embodiments, the host device just needs to send a setting instruction including a common communication address through a preset communication address of the communication bus, and obtain comprehensive response information based on an information acquisition request sent on the communication bus toward the common communication address. According to the comprehensive response information, the installation status of at least two slave devices connected to the communication bus may be determined, thereby shortening the detection time and improving the response speed of the host device.

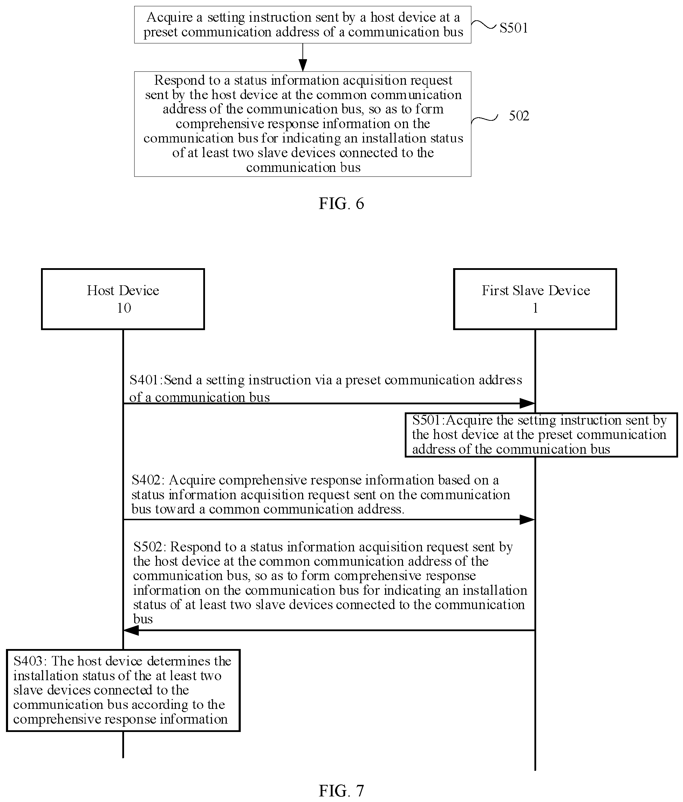

FIG. 6 is a flow chart of a communication method, according to some embodiments of the present disclosure. The method may be applied to the first slave device shown in FIG. 1. As shown in FIG. 6, the method mainly includes the following steps.

Step S501: Acquire a setting instruction sent by a host device at a preset communication address of a communication bus.

In some embodiments, the host device sends a setting instruction on the communication bus through the preset communication address corresponding to each slave device, and the setting instruction includes a common communication address. After the host device sends the setting instruction on the communication bus, the first slave device may obtain the setting instruction corresponding to its preset communication address on the communication bus, and obtain the common communication address from the setting instruction. In some embodiments, the first slave device caches the common communication address. The preset communication addresses corresponding to at least two slave devices on the communication bus are different from each other. In some embodiments, the common communication address is different from the preset communication addresses corresponding to the at least two slave devices on the communication bus.

In some embodiments, the setting instruction also includes response indication information, and the first slave device determines the first response information to be provided based on the response indication information. In some embodiments, the response indication information is directly used as the first response information. For example, if the response indication information is 10101111 11111111 11111111 11111111, then the first response information is determined to be 10101111 11111111 11111111 11111111. In some embodiments, the first slave device obtains the first response information to be provided after performing information processing based on the response indication information. Exemplarily, the first response information is composed of multiple bytes. The first slave device determines the content of the n-th byte of the first response information to be the response indication information based on the preset order. For example, the response indication information obtained from the setting instruction is 10101111, the first response information is composed of 4 bytes, the preset order is 1, the content of the first byte of the first response information is determined to be 10101111, and the content of the remaining bytes is the default content, for example, all are 11111111, and the obtained first response information is 10101111 11111111 11111111 11111111. Apparently, those skilled in the art may also use other methods to determine the first response information according to actual needs. Based on the implementation method of the embodiments of the present disclosure described in detail under the step S403, the comprehensive response information includes 4 bytes, and the data segment corresponding to the first slave device is the first byte. When the first response information is determined to be 10101111 11111111 11111111 11111111, the first verification information corresponding to the first slave device is 10101111.

Step S502: Respond to the information acquisition request sent by the host device at the common communication address of the communication bus, so as to form comprehensive response information on the communication bus for indicating the installation status of at least two slave devices connected to the communication bus.

The first slave device responds to the information acquisition request and outputs the first response information on the communication bus to indicate that the first slave device is installed in place. It may be understood that when merely the first response information is output on the communication bus, the comprehensive response information includes the first response information of the first slave device. When there are other slave devices on the communication bus that respond to the information acquisition request and output the first response information on the communication bus, the first response information output by each slave device together forms the comprehensive response information.

In some embodiments, when the setting instruction also includes response indication information, the first slave device may respond to the information acquisition request. Specifically, the first slave device outputs the first response information to the communication bus within a preset time period based on the response indication information. For example, in some application scenarios, the host device and the slave devices communicate based on the I2C protocol, and the first slave device may respond to the information acquisition request and output the first response information to the communication bus within a specific clock cycle.

In some embodiments, when the response indication information includes the first verification information, the first response information output by the first slave device may include at least partial information of the first verification information. In one embodiment, the first response information includes the response indication information. Exemplarily, the first slave device uses the response indication information as the first response information. For example, the response indication information is 10101111 11111111 11111111 11111111, where the first verification information is 10101111. Correspondingly, the first slave device uses 10101111 11111111 11111111 11111111 as the first response information.

In some embodiments, the first response information includes response indication information, and the first slave device obtains the first response information after processing based on the response indication information. For example, the response indication information is 10101111 11111111 11111111 11111111, and the first slave device obtains the first verification information and the position information of the first verification information according to the response indication information. Here, the first verification information is 10101111, and the position information of the first verification information is the first byte. The first slave device determines the position of the first verification information in multiple bytes of the first response information according to the position information of the first verification information, that is, the position of the first verification information in the response indication information has a preset corresponding relationship with its position in the first response information. The first slave device may determine the position of the first verification information in the first response information according to the position information of the first verification information. Further, the first slave device sets the content of the corresponding position of the first response information as the first verification information, and then fills the content of other positions (other bytes) of the first response information with specific content, for example, fills all other bytes with 11111111, so that the first response information is 10101111 11111111 11111111 11111111. It should be noted that, in some embodiments, the specific content used to fill the remaining bytes may be the same or different from the remaining information in the response indication information other than the first verification information, and the specific content between the remaining bytes of the first response information may be the same or different.

In some embodiments, the first response information includes the response indication information, the first slave device obtains the first response information after processing based on the response indication information. The response indication information is the first verification information, and the position of the first verification information of the first slave device has a preset order in the first response information. At this point, the first slave device obtains the first verification information based on the response indication information, sets the bytes of the preset order in the first response information as the first verification information, and fills the remaining bytes of the first response information with specific content. The specific content between the remaining bytes can be the same or different. For example, the value of the first verification information is 10101111, the first response information is composed of 4 bytes, the preset order of the first verification information of the first slave device in the first response information is the first, that is, it is located in the first byte. The specific content used to fill the other bytes of the first response information is 11111111. When the response indication information is 10101111, the first slave device obtains the first verification information of 10101111 according to the response indication information, and the first response information finally generated is 10101111 11111111 11111111 11111111.

In the above embodiment, the first response information includes complete response indication information, and includes first verification information corresponding to the first slave device.

In some embodiments, the first response information merely includes partial information of the first verification information in the response indication information. Exemplarily, if the response indication information is 10101010 11111111 11111111 11111111, where the first verification information is 10101010, corresponding to the first byte of the response information, the first slave device may take partial information of the first verification information (e.g., take the first four bits 1010) to determine the first four bits of the first byte of the first response information. The last four bits of the first byte may be determined to be 1111, and the remaining bytes of the first response information may be determined to be 11111111, so that the first response information is 10101111 11111111 11111111. The response information provided by a second slave device connected to the communication bus includes the remaining content of the first verification information corresponding to the first slave device. For example, the first byte of the response information of the second slave device is 11111010, which includes the last four bits of the first verification information of the first slave device. When the first slave device and the second slave device output response information to the communication bus within the same preset time period, the first byte of the combined comprehensive response information is 10101010, that is, the comprehensive response information includes the complete verification information of the first slave device. In the above embodiment, the first response information includes partial information of the first verification information. It should be noted that the generation method of the first response information may be selected according to actual business needs, which is not specifically limited in the present disclosure.

In some embodiments, when the first slave device outputs the first response information to the communication bus within the preset time period, the first response information includes at least partial information of the first verification information. The preset time period includes multiple sub-time periods, and different sub-time periods have different orders within the preset time period. In some scenarios, based on the I2C protocol, when other slave devices are connected to the communication bus, the time periods for the other slave devices to output the response information are the same as the time period for the first slave device to output the first response information, and the data lengths are the same, so that the first response information output by the first slave device, together with the response information output by other slave devices, may form comprehensive response information.

In some embodiments, the orders of the sub-time periods corresponding to at least partial information of the first verification information in multiple sub-time periods are associated with the slave devices, which may be understood as corresponding to the preset communication addresses corresponding to the slave devices. Specifically, the orders of the sub-time periods, in multiple sub-time periods, corresponding to at least partial information of the first verification information may be a preset order. The first slave device may determine the orders of the sub-time periods corresponding to at least partial information of the first verification information based on the pre-stored preset order, or may determine the preset order based on the attribute information (such as serial number, installation location, color information, etc.) corresponding to the first slave device. For example, the first response information consists of 4 bytes. When outputting the first response information, the first slave device sequentially outputs the corresponding data in multiple sub-time periods. When the preset order corresponding to the first slave device is 1, the first slave device outputs the first byte of data in the first sub-time period, and the first byte of data includes at least partial information of the first verification information.

In some embodiments, the orders of the sub-time periods, in multiple sub-time periods, corresponding to at least partial information of the first verification information are determined based on the response indication information. Exemplarily, the first slave device may directly output the response indication information as the first response information, that is, the first slave device may determine the orders of the sub-time periods, in multiple sub-time periods, corresponding to at least partial information of the first verification information. For example, the response indication information is 10101010 11111111 11111111 11111111, where the first verification information is 10101010. When the first slave device directly outputs the first response information 10101010 11111111 11111111 11111111, which is the same as the response indication information. That is, the first slave device outputs 10101010 in the first sub-time period and outputs 11111111 in the second, third, and fourth sub-time periods. It may be determined that the first verification information 10101010 in the first response information is in the first byte. Correspondingly, when outputting the above-mentioned first response information, the order of the sub-time period corresponding to the first verification information is the first in the multiple sub-time periods. Alternatively, the first slave device may first determine the first verification information and the corresponding position information based on the response indication information, thereby determining the orders of the sub-time periods corresponding to at least partial information of the first verification information in multiple sub-time periods, and then output the first response information after corresponding information processing. For example, the response indication information is 10101111 11111111 11111111 11111111, where the first verification information is 10101111. The first slave device may determine, based on the response indication information, that the position information corresponding to the first verification information is the first byte, thereby determining that the order of the sub-time period corresponding to at least partial information of the first verification information is the first in the multiple sub-time periods. The first slave device may take the content of the first verification information as the content of the first byte in the first response information, and determine the content of the second, third, and fourth bytes to be 11111111, and then output the contents of the above four bytes in different sub-time periods respectively. Specifically, the first slave device outputs 10101111 in the first sub-time period, and outputs 11111111 in the second, third, and fourth sub-time periods, thereby generating the first response information 10101111 11111111 11111111 11111111. For another example, the response indication information is 10101010 11111111 11111111 11111111, where the first verification information is 10101010. The first slave device may determine, based on the response indication information, that the position information corresponding to the first verification information is the first byte, and then take the first four bits 1010 of the first verification information, and determine that the order of the sub-time period corresponding to the partial information of the first verification information (that is, the first four bits 1010) is the first in the multiple sub-time periods. The first slave device determines the last four bits as 1111, and determines the contents of the second, third, and fourth bytes as 11111111, and then outputs the contents of the above four bytes in different sub-time periods, respectively, to generate the first response information 10101111 11111111 11111111 11111111. It may be understood that when the first response information is output, the partial information of the first verification information (e.g., the first four bits 1010) is output in the first sub-time period. It should be noted that when the response information provided by a second slave device connected to the communication bus contains the remaining content of the first verification information corresponding to the first slave device (e.g., the last four bits 1010), when the first slave device and the second slave device output the response information to the communication bus within the same preset time period, the last four bits of the first verification information in the response information provided by the second slave device may be combined with the first four bits of the first verification information in the first response information to form complete first verification information.

It may be understood that if the first slave device is installed in place and the first response information is composed of 4 bytes, the first response information may be output in the preset time period corresponding to the 4 bytes, and the preset time period includes 4 sub-time periods. When a sub-time period corresponds to the output of one byte, the sub-time period may be 8T (i.e., 8 clock cycles), then at least partial information of the first verification information may be output in the corresponding sub-time period. The data size (e.g., the number of bytes) of the first response information may be determined according to the needs of the actual applications, and then the number of sub-time periods included in the preset time period and the number of clock cycles included in each sub-time period may be determined.

In some scenarios, the host device needs to perform installation check on each slave device before each operation. For example, the first slave device needs to be checked for installation every time, and the orders of the sub-time periods, in the multiple sub-time periods, corresponding to at least partial information of the first verification information in the first response information output by the first slave device each time may be the same or different, which is not limited in the embodiments of the present disclosure.

It should be noted that the specific implementation of steps S501 and S502 may refer to the relevant content in the communication methods applied to the host device.

In some embodiments of the present disclosure, step S501 and step S502 may also be performed in a proxy mode, which is described in detail below.

According to the proxy mode, in step S501, the first slave device obtains the setting instruction sent by the host device through the communication bus, and the obtained setting instruction may also include the setting instruction corresponding to the preset communication address corresponding to any second slave device.

In some embodiments, the first slave device completely responds to the setting instruction corresponding to the second slave device. In step S502, the response information provided by the first slave device on the communication bus includes the verification information corresponding to the second slave device. The response information provided by the first slave device on the communication bus indicates that the second slave device is installed in place, and the first slave device directly outputs the response information corresponding to the second slave device in step S502. The response information includes the verification information corresponding to the second slave device.

In some embodiments, based on the proxy mode, in step S501, the first slave device respectively obtains the setting instructions sent by the host device through at least two preset communication addresses on the communication bus. The at least two preset communication addresses correspond to the first slave device and at least one second slave device respectively, and the first slave device and the at least one second slave device may be some or all slave devices connected to the communication bus. Alternatively, the at least two preset communication addresses correspond to at least two second slave devices respectively, and the at least two second slave devices are some or all slave devices connected to the communication bus.

In step S502, the first slave device responds to the information acquisition request and provides response information corresponding to the first slave device and at least one second slave device on the communication bus. When the first slave device and the at least one second slave device are all slave devices connected to the communication bus, exemplarily, the response information output by the first slave device on the communication bus is comprehensive response information. When the first slave device and the at least one second slave device are just some slave devices connected to the communication bus, the response information output by the first slave device on the communication bus and the response information output by other slave devices connected to the communication bus together form comprehensive response information.

Alternatively, the first slave device responds to the information acquisition request and provides response information corresponding to at least two second slave devices on the communication bus. The response information includes verification information corresponding to the at least two slave devices. When the at least two second slave devices are all slave devices connected to the communication bus, exemplarily, the response information output by the first slave device on the communication bus is comprehensive response information. When the at least two second slave devices are just some slave devices connected to the communication bus, the response information output by the first slave device on the communication bus and the response information output by other slave devices connected to the communication bus together form comprehensive response information.

When the first slave device provides response information corresponding to at least two slave devices on the communication bus, exemplarily, the first slave device first obtains response information representing the at least two slave devices at the same time before step S502. Exemplarily, when the response information provided by the first slave device on the communication bus indicates that both the second slave device and the first slave device are installed in place, the first slave device first determines the response information corresponding to the second slave device and the first slave device respectively, and then combines the two response information into the second response information through an AND operation or the like. For example, the data length of the second response information and the comprehensive response information is four bytes, the verification information of the response information corresponding to the second slave device is 01010101, corresponding to the second byte of the response information, and the verification information corresponding to the first slave device is 10101111, corresponding to the first byte of the response information. Then, before step S502, the response information corresponding to the second slave device is 11111111 01010101 11111111 11111111 and the response information corresponding to the first slave device 10101111 11111111 11111111 11111111 are combined by AND operation or the like to obtain response information 10101111 01010101 11111111 11111111. The second response information 10101111 01010101 11111111 11111111 is then obtained.

In some embodiments, the first slave device partially responds to the setting instruction corresponding to the second slave device, and in step S502, the response information provided by the first slave device on the communication bus includes partial data of the verification information corresponding to the second slave device. The response information provided by the first slave device on the communication bus may just include partial data of the verification information corresponding to the second slave device, or may also include at least partial data of the verification information corresponding to other slave devices. When the response information provided by the first slave device on the communication bus just includes partial data of the verification information corresponding to the second slave device, the first slave device directly outputs the response information including the partial data of the verification information corresponding to the second slave device in step S502. Exemplarily, the response information has four bytes, and the verification information corresponding to the second slave device is 01010101. Corresponding to the second byte of the response information, the first slave device takes the first four bits 0101. The first slave device directly outputs the response information 11111111 01011111 11111111 11111111 in step S502, including the partial data of the verification information corresponding to the second slave device. When the response information provided by the first slave device on the communication bus also includes at least partial data of the verification information of other slave devices, the first slave device first combines the partial data of the verification information corresponding to the second slave device and the at least partial data of the verification information of other slave devices into the provided response information by means of AND operation or the like. For example, the data length of the response information and the comprehensive response information provided by the first slave device on the communication bus is four bytes. The response information provided by the first slave device on the communication bus also includes the verification information 10101111 of the first slave device, corresponding to the first byte of the response information. The verification information of the response information corresponding to the second slave device is 01010101, corresponding to the second byte of the response information. The first slave device takes the first four bits 0101, then before step S502, 10101111 11111111 11111111 11111111 and 11111111 01011111 11111111 11111111 are combined into 10101111 01011111 11111111 11111111 by means of AND operation or the like. The obtained second response information is 10101111 01011111 11111111 11111111. It may be understood that in step S501, when other slave devices except the first slave device provide response information on the communication bus, the response information provided by the other slave devices may be combined with the response information provided by the first slave device on the communication bus to generate comprehensive response information. If the response information provided by the other slave devices at least includes the remaining content of the verification information corresponding to the second slave device, the comprehensive response information includes the verification information corresponding to the second slave device. For example, the response information provided by the other slave devices is 11111111 11110101 11111111 11111111, which is combined with the response information 10101111 01011111 11111111 11111111 provided by the first slave device on the communication bus to generate the comprehensive response information 10101111 01010101 11111111 11111111, its second byte 01010101 matches the verification information of the second slave device, indicating that the second slave device is installed in place. In the embodiments of the present disclosure, steps S501 and S502 are performed in a proxy mode, and the first slave device partially responds to the setting instruction corresponding to the second slave device. If the first slave device cooperates with other slave devices to fully respond to the setting instruction corresponding to the second slave device, it means that the first slave device and the other slave devices may cooperate to respond to the instruction corresponding to the second slave device. For the host device, it may be determined that the second slave device is installed in place accordingly.

It may be understood that if at least one second slave device connected to the communication bus responds to the information acquisition request sent by the host device at the common communication address based on the proxy mode and the common communication address, and outputs response information to form comprehensive response information on the communication bus for indicating the installation status of at least two slave devices connected to the communication bus, when the second response information includes partial data of the first verification information corresponding to the first slave device, in step S501, the first response information output by the first slave device may also just include the partial data of the verification information of the first verification information. The comprehensive response information formed by combining the first response information and the second response information on the communication bus includes the first verification information. For the host device, it may be determined that the first slave device is installed in place accordingly.

In some embodiments, in the proxy mode, the first slave device outputs second response information to the communication bus within a preset time period based on the response indication information corresponding to at least two preset communication addresses. When the response indication information includes verification information corresponding to the corresponding preset communication address, the second response information output by the first slave device may include at least partial information of the verification information corresponding to at least two preset communication addresses. Exemplarily, the first slave device may obtain the response indication information corresponding to the first slave device and the second slave device, where slave device 1 corresponds to preset communication address 1, and slave device 2 corresponds to preset communication address 2. Slave device 1 may store preset communication addresses 1 and 2, then slave device 1 may obtain the response indication information corresponding to slave device 1 and the response indication information corresponding to slave device 2. In one embodiment, the second response information includes verification information of the response indication information corresponding to at least two preset communication addresses. For example, slave device 1 may obtain response indication information 10101111 11111111 11111111 11111111 of slave device 1 and response indication information 11111111 01010101 11111111 11111111 of slave device 2, and then combine both into second response information 10101111 01010101 11111111 11111111 by AND operation or the like. Here, the verification information corresponding to slave device 1 is 10101111, and the verification information corresponding to slave device 2 is 01010101. It may be understood that the second response information includes verification information of response indication information corresponding to preset communication address 1 and preset communication address 2, respectively. In some embodiments, the second response information includes partial information of verification information corresponding to at least two preset communication addresses, respectively. For example, when slave device 1 may obtain response indication information 10101010 11111111 11111111 11111111 of slave device 1 and response indication information 11111111 01010101 11111111 11111111 of slave device 2. The verification information corresponding to slave device 1 is 10101010. Slave device 1 may obtain part information of this verification information (e.g., the first four bits 1010), and the last four bits are determined to be 1111. The obtained response information 1 is 10101111 11111111 11111111 11111111. The verification information corresponding to slave device 2 is 01010101. Slave device 1 may obtain partial information of this verification information (e.g., the first four bits 0101), and the last four bits are determined to be 1111. The obtained response information 2 is 11111111 01011111 11111111 11111111. Based on the response information 1 and the response information 2, the second response information 10101111 01011111 11111111 11111111 is obtained. That is, the second response information includes partial information of the verification information corresponding to the preset communication address 1 and partial information of the verification information corresponding to the preset communication address 2. It should be noted that if the response information provided by other slave devices contains the remaining content of the verification information corresponding to the slave device 1 (e.g., the last four bits 1010) and the remaining content of the verification information corresponding to the slave device 2 (e.g., the last four bits 0101), these remaining contents may be combined with the first four bits of the verification information corresponding to the preset communication address 1 and the preset communication address 2 in the second response information, to form the complete verification information corresponding to the preset communication address 1 and the complete verification information corresponding to the preset communication address 2. The comprehensive response information may include the verification information corresponding to the slave device 1 and the verification information corresponding to the slave device 2. In some embodiments, the second response information includes response indication information corresponding to at least two preset communication addresses, and the above response indication information may be used as verification information. For example, slave device 1 may obtain the response indication information 10101111 corresponding to slave device 1, corresponding to the first byte. The verification information corresponding to slave device 1 is 10101111. Slave device 1 may also obtain the response indication information 01010101 corresponding to slave device 2, corresponding to the second byte. Then slave device 1 may determine the contents of the third and fourth bytes as 11111111, thereby generating the second response information 10101111 01010101 11111111 11111111. It may be understood that the second response information also includes the verification information of the response indication information corresponding to the preset communication address 1 and the verification information of the response indication information corresponding to the preset communication address 2 respectively.

In some embodiments, in the proxy mode, the first slave device outputs the second response information to the communication bus within a preset time period based on the response indication information corresponding to at least two preset communication addresses respectively, where the second response information includes at least partial information of the verification information corresponding to at least two preset communication addresses respectively. The preset time period includes multiple sub-time periods, and the orders of the sub-time periods corresponding to at least partial information of the verification information corresponding to at least two preset communication addresses are different in the multiple sub-time periods. It may be understood that at least partial information of the verification information corresponding to each slave device is output within its corresponding sub-time period, and different sub-time periods have different orders within the preset time period. Exemplarily, the first slave device may obtain the response indication information corresponding to the first slave device and the second slave device. The slave device 1 corresponds to the preset communication address 1, and the slave device 2 corresponds to the preset communication address 2. The slave device 1 stores the preset communication addresses 1 and 2, and the slave device 1 may obtain the response indication information 10101111 11111111 11111111 11111111 of the slave device 1 and the response indication information 11111111 01010101 11111111 11111111 of the slave device 2. For example, slave device 1 directly combines the response indication information corresponding to slave device 1 and the response indication information corresponding to slave device 2 into the second response information 10101111 01010101 11111111 11111111 by AND operation or the like. As may be seen from the above, the check information 10101111 corresponding to the first byte in the second response information corresponds to slave device 1 (also corresponding to the preset communication address 1), and the check information 01010101 corresponding to the second byte corresponds to slave device 2 (also corresponding to the preset communication address 2). It may be understood that when outputting the second response information, the first slave device sequentially outputs the corresponding data in multiple sub-time periods. Specifically, 10101111 is output in the first sub-time period, that is, the order of the sub-time period corresponding to the check information corresponding to slave device 1 is the first. 01010101 is output in the second sub-time period, that is, the order of the sub-time period corresponding to the check information corresponding to slave device 2 is the second. 11111111 is output in the third and fourth sub-time periods, that is, the orders of the sub-time periods corresponding to the check information corresponding to slave device 1 and slave device 2 are different in the multiple sub-time periods. In other words, the orders of the sub-time periods corresponding to the check information corresponding to the preset communication address 1 and the preset communication address 2 are different in the multiple sub-time periods. For another example, slave device 1 may take partial information of the corresponding check information 10101010 (e.g., take the first four bits 1010) based on the response indication information 10101010 11111111 11111111 corresponding to slave device 1, and output it in the first byte of the second response information. Slave device 1 also takes partial information of the corresponding check information 01010101 (e.g., take the first four bits 0101) based on the response indication information 11111111 01010101 11111111 11111111 corresponding to slave device 2, and output it in the second byte of the second response information. The data of other bits in the second response information may all be 1. For example, the second response information is 10101111 01011111 11111111 11111111. Specifically, when outputting the second response information, the first slave device sequentially outputs the corresponding data in multiple sub-time periods, that is, outputs 10101111 in the first sub-time period, outputs 01011111 in the second sub-time period, and outputs 11111111 in the third and fourth sub-time periods. As may be seen from the above, the orders of the sub-time periods corresponding to the partial information of the verification information corresponding to slave device 1 and slave device 2 are different in multiple sub-time periods. That is, the orders of the sub-time periods corresponding to the partial information of the verification information corresponding to preset communication address 1 and preset communication address 2 are different in multiple sub-time periods. Here, if the response information provided by other slave devices contains the remaining content of the verification information corresponding to slave device 1 and the remaining content of the verification information corresponding to slave device 2, they can be combined with the partial information of the verification information corresponding to preset communication address 1 and preset communication address 2 in the second response information to form complete verification information.

It should be noted that the orders of the sub-time periods corresponding to at least partial information of the verification information corresponding to at least two preset communication addresses in multiple sub-time periods may be associated with the corresponding slave device. Alternatively, the orders of the sub-time periods corresponding to at least partial information of the verification information corresponding to at least two preset communication addresses in multiple sub-time periods may be determined based on the response indication information corresponding to at least two preset communication addresses. The method for determining the orders of the sub-time periods corresponding to at least partial information of the verification information corresponding to different preset communication addresses in multiple sub-time periods may refer to the relevant description of the above embodiments, which will not be repeated here.

FIG. 7 is a flow chart of a communication method, according to some embodiments of the present disclosure. The method may be applied to the communication system shown in FIG. 1. As shown in FIG. 7, the method mainly includes the following steps.

Step S401: The host device sends a setting instruction via a preset communication address of the communication bus.

In some embodiments, sending the setting instruction through a preset communication address of the communication bus includes: sending the setting instruction through at least two preset communication addresses on the communication bus respectively, and the at least two preset communication addresses respectively correspond to at least two slave devices connected to the communication bus.

In some embodiments, the setting instruction further includes response indication information, and the response indication information is used to instruct the corresponding slave device to output corresponding response information.

Step S501: A first slave device obtains the setting instruction sent by the host device at the preset communication address of the communication bus.

In some embodiments, the setting instruction includes a common communication address.

In some embodiments, the common communication address is different from the preset communication address.

In some embodiments, the setting instruction also includes response indication information corresponding to the preset communication address.

In some embodiments, obtaining the setting instruction sent by the host device at the preset communication address of the communication bus includes: respectively obtaining setting instructions sent by the host device through at least two preset communication addresses of the communication bus.

In some embodiments, the at least two preset communication addresses respectively correspond to at least two slave devices connected to the communication bus.

In some embodiments, the setting instruction also includes response indication information corresponding to the corresponding preset communication addresses.

Step S502: The first slave device responds to the information acquisition request sent by the host device at the common communication address es of the communication bus to form comprehensive response information on the communication bus for indicating the installation status of the at least two slave devices connected to the communication bus.

In some embodiments, the formation of comprehensive response information on the communication bus for indicating the installation status of the at least two slave devices connected to the communication bus specifically includes: forming comprehensive response information on the communication bus for indicating the installation status of all slave devices connected to the communication bus.

In some embodiments, responding to the information acquisition request sent by the host device at the common communication address of the communication bus includes: outputting first response information on the communication bus based on the response indication information.

In some embodiments, the comprehensive response information formed on the communication bus for indicating the installation status of at least two slave devices connected to the communication bus includes: the comprehensive response information formed by using the first response information together with the response information output on the communication bus by other slave devices, among the at least two slave devices connected to the communication bus, in response to the information acquisition request.

In some embodiments, the response indication information includes first verification information, and the first response information includes at least partial data of the first verification information.

In some embodiments, responding to the information acquisition request sent by the host device at the common communication address of the communication bus includes: outputting second response information on the communication bus based on response indication information respectively corresponding to the at least two preset communication addresses.

In some embodiments, the response indication information includes verification information corresponding to the corresponding preset communication addresses, and the second response information includes at least partial data of the verification information corresponding to each preset communication address of the at least two preset communication addresses.

In some embodiments, the second response information is the comprehensive response information.

Alternatively, the second response information is used, to form the comprehensive response information, together with the response information output by other slave devices among the at least two slave devices connected to the communication bus on the communication bus in response to the information acquisition request.

In some embodiments, the first response information and the response information output on the communication bus by other slave devices among at least two slave devices connected to the communication bus in response to the information acquisition request are output on the communication bus in a same time period and have a same data length.

In some embodiments, outputting the first response information on the communication bus includes outputting the first response information on the communication bus within a preset time period.

In some embodiments, the first response information includes response indication information.

In some embodiments, the preset time period includes multiple sub-time periods; the orders of the sub-time periods corresponding to at least partial information of the first verification information in the multiple sub-time periods are associated with the slave devices; or, the orders of the sub-time periods corresponding to at least partial information of the first verification information in the multiple sub-time periods are determined based on the response indication information.

In some embodiments, outputting the second response information on the communication bus includes outputting the second response information on the communication bus within a preset time period.

In some embodiments, the second response information includes response indication information corresponding to at least two preset communication addresses respectively.

In some embodiments, the preset time period includes multiple sub-time periods, and the orders of the sub-time periods corresponding to at least partial information of the verification information corresponding to at least two preset communication addresses are different in the multiple sub-time periods.

Step S402: The host device acquires comprehensive response information based on the information acquisition request sent on the communication bus toward the common communication address.

Step S403: The host device determines the installation status of at least two slave devices connected to the communication bus according to the comprehensive response information.

S401, S402, S403, S501, and S502 here are consistent with S401, S402, S403, S501, and S502 described earlier, details of which are not repeated here.

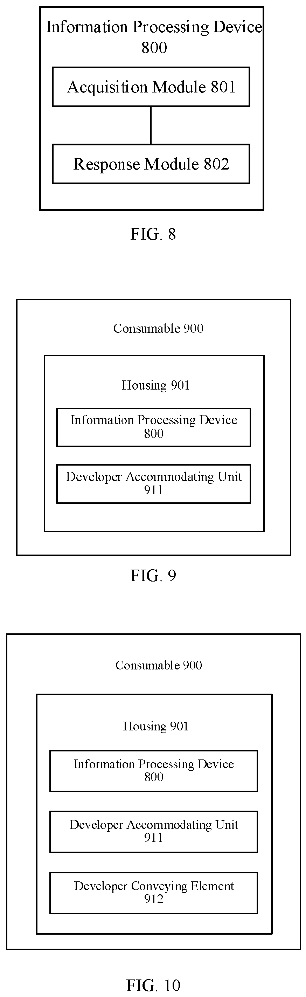

Corresponding to the above embodiments, the embodiments of the present disclosure further provide an information processing device, which is used as a slave device and is connected to the host device through a communication bus. FIG. 8 is a structural block diagram of an information processing device according to some embodiments of the present disclosure. As shown in FIG. 8, the an information processing device 800 includes: an acquisition module 801, configured to acquire a setting instruction sent by a host device at a preset communication address of a communication bus, where the setting instruction includes a common communication address; and a response module 802, configured to respond to the information acquisition request sent by the host device at the common communication address of the communication bus, so as to form comprehensive response information on the communication bus for indicating an installation status of at least two slave devices connected to the communication bus.

In some embodiments, the response module 802 is specifically configured to respond to the information acquisition request sent by the host device at the common communication address of the communication bus, so as to form comprehensive response information on the communication bus for indicating the installation status of all slave devices connected to the communication bus.

In some embodiments, the common communication address is different from the preset communication address.

In some embodiments, the setting instruction further includes response indication information corresponding to the preset communication address; and the response module 802 is specifically configured to output the first response information on the communication bus based on the response indication information.

In some embodiments, the first response information is used, to form the comprehensive response information, together with the response information output on the communication bus by other slave devices among the at least two slave devices connected to the communication bus in response to the information acquisition request.

In some embodiments, the response indication information includes first verification information, and the first response information includes at least partial data of the first verification information.

In some embodiments, the acquisition module 801 is specifically configured to respectively acquire the setting instructions sent by the host device to at least two preset communication addresses of the communication bus.

In some embodiments, the at least two preset communication addresses respectively correspond to the at least two slave devices connected to the communication bus.

In some embodiments, the setting instruction further includes response indication information corresponding to the corresponding preset communication addresses, and the response module 802 is specifically configured to output the second response information on the communication bus based on the response indication information respectively corresponding to the at least two preset communication addresses.

In some embodiments, the response indication information includes verification information corresponding to the corresponding preset communication addresses, and the second response information includes at least partial data of the verification information corresponding to each preset communication address of the at least two preset communication addresses.

In some embodiments, the second response information is the comprehensive response information; or the second response information is used, to form the comprehensive response information, together with the response information output by other slave devices among the at least two slave devices connected to the communication bus on the communication bus in response to the information acquisition request.

In some embodiments, the first response information and the response information output on the communication bus by other slave devices among at least two slave devices connected to the communication bus in response to the information acquisition request are output on the communication bus in the same time period and have the same data length.

In some embodiments, the response module 802 is specifically configured to output the first response information to the communication bus within a preset time period based on the response indication information.

In some embodiments, the first response information includes the response indication information.

In some embodiments, the preset time period includes multiple sub-time periods; the orders of the sub-time periods corresponding to at least partial information of the first verification information in the multiple sub-time periods are associated with the slave devices; or the orders of the sub-time periods corresponding to at least partial information of the first verification information in the multiple sub-time periods are determined based on the response indication information.

In some embodiments, the response module 802 is specifically configured to output the second response information to the communication bus within a preset time period based on the response indication information corresponding to at least two preset communication addresses respectively.

In some embodiments, the second response information includes the response indication information corresponding to at least two preset communication addresses respectively.

In some embodiments, the preset time period includes multiple sub-time periods, and the sub-time periods corresponding to at least partial information of the verification information corresponding to at least two preset communication addresses respectively have different orders in the multiple sub-time periods.

In some embodiments, the information processing device 800 may be a consumable chip. In some embodiments, the acquisition module 801 and the response module 802 are both disposed in a chip control unit of the consumable chip. In some embodiments, the chip control unit is disposed in a processor of the information processing device 800.

It should be understood that the acquisition module 801 and the response module 802 in the information processing device 800 may be implemented by software or hardware.

In some embodiments, at least one of the acquisition module 801 and the response module 802 may be an external module outside the consumable chip and electrically connected to the consumable chip, and the other module is built into the chip control unit of the consumable chip. In other words, the consumable includes the consumable chip and the external module electrically connected to the consumable chip. Specifically, the chip control unit may be a circuit unit of a device such as an MCU, an FPGA, or a DSP.

Specifically, the acquisition module 801 and the response module 802 may be circuit units, including devices such as FPGA, MCU, DSP, etc. The acquisition module 801 and the response module 802 may also realize corresponding functions by building a digital logic calculator. This disclosure does not further limit the specific implementation form of each unit.

In some embodiments, the information processing device 800 may include a first consumable chip and a second consumable chip, the response module 802 may be disposed on the second consumable chip, and the acquisition module 801 may be disposed on the first consumable chip. The host device may specifically be the image forming device. The host device sends a setting instruction to the first consumable chip, and the first consumable chip acts as a slave to respond to the instruction sent by the host. That is, the acquisition module 801 of the first consumable chip acquires the setting instruction, and then the first consumable chip sends the setting instruction or the converted information of the setting instruction to the second consumable chip. The response module 802 of the second consumable chip responds to the information acquisition request sent by the host device at the common communication address of the communication bus, so as to form comprehensive response information on the communication bus for indicating the installation status of at least two slave devices connected to the communication bus.

In some embodiments, the information processing device 800 may include a first consumable chip and an auxiliary circuit module, the response module 802 may be disposed in the auxiliary circuit module, and the acquisition module 801 may be disposed in the first consumable chip. The host device may specifically be the image forming device. The host device sends a setting instruction to the first consumable chip, and the first consumable chip acts as a slave to respond to the instruction sent by the host, that is, the acquisition module 801 of the first consumable chip acquires the setting instruction. Then, the first consumable chip sends the setting instruction or the converted information of the setting instruction to the auxiliary circuit module. The response module 802 of the auxiliary circuit module responds to the information acquisition request sent by the host device at the common communication address of the communication bus, so as to form comprehensive response information on the communication bus for indicating the installation status of at least two slave devices connected to the communication bus.

The embodiments of the present disclosure also provide an information processing device 800, the information processing device 800 is used as a slave device. The information processing device 800 includes a processor, and the processor may be configured to execute the steps of the communication methods applied to the slave device. It should be noted that the specific content involved in the device embodiments disclosed herein may be found in the description of the above method embodiments, and for the sake of brevity, it will not be repeated here.

In some embodiments, the information processing device 800 further includes a memory storing computer-executable instructions. The processor executes the computer-executable instructions stored in the memory, so that the processor executes the steps of the communication methods applied to the slave device in the above method embodiments.

FIG. 9 is a schematic structural diagram of a consumable, according to some embodiments of the present disclosure. As shown in FIG. 9, the consumable 900 includes a housing 901; a developer accommodating unit 911 located in the housing 901 for accommodating a developer; and the information processing device 800 described in the above embodiments.

FIG. 10 is a schematic structural diagram of another consumable, according to some embodiments of the present disclosure. As shown in FIG. 10, the consumable 900 further includes a developer conveying element 912 for conveying the developer based on the embodiment shown in FIG. 9.

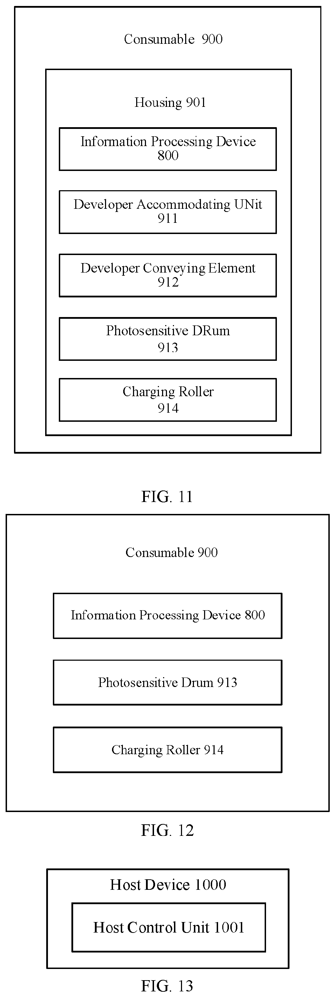

FIG. 11 is a schematic structural diagram of another consumable, according to some embodiments of the present disclosure. As shown in FIG. 11, the consumable 900 further includes a photosensitive drum 913 and a charging roller 914 for charging the photosensitive drum 913 based on the embodiment shown in FIG. 10.

FIG. 12 is a schematic structural diagram of another consumable, according to some embodiments of the present disclosure. As shown in FIG. 12, the consumable 900 includes a photosensitive drum 913; a charging roller 914 for charging the photosensitive drum 913; and the information processing device 800 described in the above embodiments.

It should be noted that the specific contents of the information processing devices 800 in the embodiments shown in FIG. 9 to FIG. 12 may be found in the descriptions of the above embodiments, and will not be repeated here for the sake of brevity.

The embodiments of the present disclosure further provide a communication method, which may be applied to the information processing device or the first slave device, and the method mainly includes the following steps.

Step S121: The first slave device obtains a setting instruction sent by the host device at a preset communication address of the communication bus.

In some embodiments, the setting instruction includes a common communication address.

In some embodiments, the common communication address is different from the preset communication address.

In some embodiments, the setting instruction also includes response indication information corresponding to the preset communication address.

In some embodiments, obtaining the setting instruction sent by the host device at the preset communication address of the communication bus includes: respectively obtaining setting instructions sent by the host device through at least two preset communication addresses of the communication bus.

In some embodiments, the at least two preset communication addresses respectively correspond to at least two slave devices connected to the communication bus.

In some embodiments, the setting instruction also includes response indication information corresponding to the corresponding preset communication addresses.

Step S122: The first slave device responds to the information acquisition request sent by the host device at the common communication address of the communication bus to form comprehensive response information on the communication bus for indicating the installation status of at least two slave devices connected to the communication bus.

In some embodiments, the formation of comprehensive response information on the communication bus for indicating the installation status of at least two slave devices connected to the communication bus specifically includes: forming comprehensive response information on the communication bus for indicating the installation status of all slave devices connected to the communication bus.

In some embodiments, responding to the information acquisition request sent by the host device at the common communication address of the communication bus includes: outputting first response information on the communication bus based on the response indication information.

In some embodiments, the comprehensive response information formed on the communication bus for indicating the installation status of at least two slave devices connected to the communication bus includes: the comprehensive response information formed by using the first response information together with the response information output on the communication bus by other slave devices among the at least two slave devices connected to the communication bus in response to the information acquisition request.

In some embodiments, the response indication information includes first verification information, and the first response information includes at least partial data of the first verification information.

In some embodiments, responding to the information acquisition request sent by the host device at the common communication address of the communication bus includes: outputting second response information on the communication bus based on response indication information respectively corresponding to the at least two preset communication addresses.

In some embodiments, the response indication information includes verification information corresponding to the corresponding preset communication addresses, and the second response information includes at least partial data of the verification information corresponding to each preset communication address of the at least two preset communication addresses.

In some embodiments, the second response information is the comprehensive response information; or the second response information is used, to form the comprehensive response information, together with the response information output by other slave devices among the at least two slave devices connected to the communication bus on the communication bus in response to the information acquisition request.

In some embodiments, the first response information and the response information output on the communication bus by other slave devices among at least two slave devices connected to the communication bus in response to the information acquisition request are output on the communication bus in the same time period and have the same data length.

In some embodiments, outputting the first response information on the communication bus includes outputting the first response information on the communication bus within a preset time period.

In some embodiments, the first response information includes response indication information.

In some embodiments, the preset time period includes multiple sub-time periods; the orders of the sub-time periods corresponding to at least partial information of the first verification information in the multiple sub-time periods are associated with the slave devices; or, the orders of the sub-time periods corresponding to at least partial information of the first verification information in the multiple sub-time periods are determined based on the response indication information.

In some embodiments, outputting the second response information on the communication bus includes outputting the second response information on the communication bus within a preset time period.

In some embodiments, the second response information includes response indication information corresponding to at least two preset communication addresses respectively.

In some embodiments, the preset time period includes multiple sub-time periods, and the orders of the sub-time periods corresponding to at least partial information of the verification information corresponding to at least two preset communication addresses are different in the multiple sub-time periods.

The embodiments of the present disclosure also provide an information processing device for executing the above described steps.

The embodiments of the present disclosure also provide a communication method, which may be applied to the host device, and the method mainly includes the following steps.

Step S131: The host device sends a setting instruction via a preset communication address of the communication bus.

In some embodiments, sending the setting instruction through the preset communication address of the communication bus includes: sending the setting instruction through at least two preset communication addresses on the communication bus respectively, and the at least two preset communication addresses respectively correspond to at least two slave devices connected to the communication bus.

In some embodiments, the setting instruction further includes response indication information, and the response indication information is used to instruct the corresponding slave device to output corresponding response information.

Step S132: The host device obtains comprehensive response information based on the information acquisition request sent on the communication bus toward the common communication address.

Step S133: The host device determines the installation status of at least two slave devices connected to the communication bus according to the comprehensive response information.

Referring to FIG. 13, the embodiments of the present disclosure further provide a host device 1000, including a host control unit 1001, configured to execute the steps S131 to S133.

In some embodiments, the host control unit 1001 may be a circuit unit of a device such as an MCU, an FPGA, or a DSP.

Corresponding to the above embodiments, the embodiments of the present disclosure also provide a communication system, which includes the above described host device and at least two slave devices. The host device is communicatively connected with at least two slave devices through a communication bus, where X ≥ 1, and X is an integer.

It should be noted that the specific contents involved in the embodiments of disclosed herein may be found in the above description, and for the sake of brevity, they will not be repeated here.

Corresponding to the above embodiments, the embodiments of the present disclosure further provide a computer-readable storage medium, where the computer-readable storage medium may store a program, where when the program is running, the device where the computer-readable storage medium is located may be controlled to execute some or all of the steps in the above method embodiments. In some embodiments, the computer-readable storage medium may be a disk, an optical disk, a read-only memory (ROM), a random access memory (RAM), etc.

Corresponding to the above embodiments, the embodiments of the present disclosure further provide a computer program product, which includes executable instructions. When the executable instructions are executed on a computer, the computer executes some or all of the steps in the above method embodiments.

In the embodiments of the present disclosure, the host device just needs to send a setting instruction including a common communication address through a preset communication address of the communication bus, and obtain comprehensive response information based on an information acquisition request sent on the communication bus toward the common communication address. According to the comprehensive response information, the installation status of at least two slave devices connected to the communication bus may be determined, thereby shortening the detection time and improving the response speed of the host device.

In the embodiments of the present disclosure, "at least one" refers to one or more, and "more" refers to two or more. "And/or" describes the association relationship of associated objects, indicating that three relationships may exist. For example, A and/or B may indicate that A exists alone, A and B exist at the same time, or B exists alone. A and B may be singular or plural. The character "/" generally indicates that the associated objects before and after are in an "or" relationship. "At least one of the following" and similar expressions refer to any combination of these items, including any combination of single or plural items. For example, at least one of a, b and c may represent: a, b, c, ab, ac, bc, or abc, where a, b, c may be single or multiple.

Those of ordinary skill in the art will appreciate that the various units and algorithm steps described in the embodiments disclosed herein may be implemented in a combination of computer software and electronic hardware. Whether these functions are performed in hardware or software depends on the specific applications and design constraints of the technical solutions. Professional and technical personnel may use different methods to implement the described functions for each specific application, but such implementation should not be considered to be beyond the scope of the present disclosure.

Those skilled in the art may clearly understand that, for the convenience and brevity of description, the specific working processes of the systems, devices and units described above may refer to the corresponding processes in the method embodiments and will not be repeated here.

In specific embodiments provided in the present disclosure, if any function is implemented in the form of a software functional unit and sold or used as an independent product, it may be stored in a computer-readable storage medium. Based on this understanding, the technical solutions of the present disclosure, essentially the part that contributes to the existing technologies, or part of the technical solutions may be embodied in the form of a software product. The computer software product is stored in a storage medium, including a number of instructions to enable a computer device (which may be a personal computer, a server, or a network device, etc.) to perform all or part of the steps of the methods described in each embodiment of the present disclosure. The storage medium includes U disk, mobile hard disk, ROM, RAM, disk or optical disk and other media that may store program codes.

The foregoing description includes just some embodiments of the present disclosure. Any person skilled in the art may easily think of modifications or substitutions within the technical scope disclosed in the present disclosure, which should be included in the protection scope of the present disclosure. The protection scope of the present disclosure should be based on the protection scope of the claims.

## Claims

1. A communication method, comprising:
acquiring a setting instruction sent by a host device at a preset communication address of a communication bus, wherein the setting instruction includes a common communication address; and
responding to an information acquisition request sent by the host device at the common communication address of the communication bus, so as to form comprehensive response information on the communication bus for indicating an installation status of at least two slave devices connected to the communication bus.

2. The communication method according to claim 1, wherein forming the comprehensive response information on the communication bus for indicating the installation status of the at least two slave devices connected to the communication bus further includes:
forming the comprehensive response information on the communication bus for indicating an installation status of all slave devices connected to the communication bus.

3. The communication method according to claim 1 or 2, wherein the common communication address is different from the preset communication address.

4. The communication method according to anyone of claims 1-3, wherein:
the setting instruction further includes response indication information corresponding to the preset communication address; and
responding to the information acquisition request sent by the host device at the common communication address of the communication bus includes:
outputting first response information on the communication bus based on the response indication information.

5. The communication method according to claim 4, wherein forming the comprehensive response information on the communication bus for indicating the installation status of the at least two slave devices connected to the communication bus further includes:
forming the comprehensive response information using the first response information together with response information output on the communication bus by other slave devices, among the at least two slave devices, connected to the communication bus in response to the information acquisition request.

6. The communication method according to claim 4, wherein the response indication information includes first verification information, and the first response information includes at least partial data of the first verification information.

7. The communication method according to anyone of claims 1-6, wherein obtaining the setting instruction sent by the host device at the preset communication address of the communication bus includes:
respectively obtaining setting instructions sent by the host device through at least two preset communication addresses of the communication bus.

8. The communication method according to claim 7, wherein the at least two preset communication addresses respectively correspond to the at least two slave devices connected to the communication bus.

9. The communication method according to claim 8, wherein:
the setting instruction further includes response indication information respectively corresponding to the at least two preset communication addresses; and
responding to the information acquisition request sent by the host device at the common communication address of the communication bus includes:
outputting second response information on the communication bus based on the response indication information respectively corresponding to the at least two preset communication addresses.

10. The communication method according to claim 9, wherein the response indication information includes verification information corresponding to preset communication addresses, and the second response information includes at least partial data of verification information corresponding to each preset communication address of the at least two preset communication addresses.

11. The communication method according to claim 9, wherein:
the second response information is the comprehensive response information; or
the second response information is used, to form the comprehensive response information, together with response information outputted on the communication bus by other slave devices among the at least two slave devices connected to the communication bus in response to the information acquisition request.

12. The communication method according to claim 5, wherein the first response information and response information output on the communication bus by other slave devices, among the at least two slave devices connected to the communication bus, in response to the information acquisition request, are output on the communication bus in a same time period and have a same data length.

13. The communication method according to claim 6, wherein outputting the first response information on the communication bus includes:
outputting the first response information on the communication bus within a preset time period.

14. The communication method according to claim 13, wherein the first response information includes the response indication information.

15. The communication method according to claim 13, wherein:
the preset time period includes a plurality of sub-time periods; and
orders of sub-time periods, corresponding to at least partial information of the first verification information, in the plurality of sub-time periods are associated with the slave devices; or,
orders of sub-time periods, corresponding to at least partial information of the first verification information, in the plurality of sub-time periods are determined based on the response indication information.

16. The communication method according to claim 10, wherein outputting the second response information on the communication bus includes:
outputting the second response information on the communication bus within a preset time period.

17. The communication method according to claim 16, wherein the second response information includes response indication information corresponding to at least two preset communication addresses respectively.

18. The communication method according to claim 16, wherein the preset time period includes a plurality of sub-time periods, and sub-time periods corresponding to at least partial information of verification information corresponding to at least two preset communication addresses respectively are in different orders among the plurality of sub-time periods.

19. An information processing device, including a memory and one or more processors, wherein the memory stores a computer program executable by the one or more processors, and when executing the computer program, the one or more processor are configured to implement the communication method according to anyone of claims 1 to 18.

20. A consumable, comprising:
a housing;
a developer accommodating unit, located in the housing, for accommodating a developer; and
the information processing device according to claim 19.

21. The consumable according to claim 20, further comprising a developer conveying element for conveying the developer; and/or
a photosensitive drum and a charging roller for charging the photosensitive drum.

22. A consumable, comprising:
a photosensitive drum;
a charging roller, configured for charging the photosensitive drum; and
the information processing device according to claim 19.
